Europäisches Patentamt

European Patent Office

Office européen des brevets

(19)

(11) EP 1 123 349 B1

(12) EUROPÄISCHE PATENTSCHRIFT

(45) Veröffentlichungstag und Bekanntmachung des Hinweises auf die Patenterteilung:
02.06.2004 Patentblatt 2004/23

(51) Int Cl.7: C08L 67/02

(21) Anmeldenummer: 99952479.6

(86) Internationale Anmeldenummer:
PCT/EP1999/007265

(22) Anmeldetag: 01.10.1999

(87) Internationale Veröffentlichungsnummer:
WO 2000/020501 (13.04.2000 Gazette 2000/15)

(54) **UNVERSTÄRKTE THERMOPLASTISCHE FORMMASSEN**

NON-REINFORCED THERMOPLASTIC MOULDING MATERIALS

MATIERES MOULABLES THERMOPLASTIQUES NON RENFORCEES

(84) Benannte Vertragsstaaten:
AT BE CH CY DE DK ES FI FR GB GR IE IT LI LU MC NL PT SE

(30) Priorität: 01.10.1998 DE 19845289

(43) Veröffentlichungstag der Anmeldung:
16.08.2001 Patentblatt 2001/33

(73) Patentinhaber: BASF AKTIENGESELLSCHAFT
67056 Ludwigshafen (DE)

(72) Erfinder:
• FISCHER, Michael
D-67056 Ludwigshafen (DE)
• KNOLL, Manfred
D-67591 Wachenheim (DE)
• GINSS, Christophe
F-67120 Wolxheim (FR)
• BERZ, Stephan
D-60529 Frankfurt (DE)

(74) Vertreter: Isenbruck, Günter, Dr. et al
Isenbruck, Bösl, Hörschler, Wichmann, Huhn,
Patentanwälte
Theodor-Heuss-Anlage 12
68165 Mannheim (DE)

(56) Entgegenhaltungen:
EP-A- 0 471 554          EP-A- 0 643 104
US-A- 4 940 746          US-A- 5 501 898

**Beschreibung**

Die Erfindung betrifft unverstärkte thermoplastische Formmassen, Formteile daraus sowie die Verwendung der Formmassen zur Herstellung der Formteile.

Formteile aus polymeren Werkstoffen, die im Innenraum von Kraftfahrzeugen zur Anwendung kommen, müssen hohen Anforderungen bezüglich ihrer Wärmeformbeständigkeit, ihrer mechanischen Eigenschaften, ihrer Oberflächeneigenschaften, ihres Alterungsverhaltens sowie ihres Geruchsverhaltens genügen. Für die Herstellung von Formteilen für Kraftfahrzeug-Innenanwendungen werden bisher verschiedene polymere Werkstoffe verwendet.

Ein verwendeter Werkstoff ist ABS. Dieser Werkstoff weist eine schlechte UV-Beständigkeit, eine schlechte Wärmealterungsbeständigkeit und eine schlechte Wärmeformbeständigkeit (Vicat B-Erweichungstemperatur < 110°C) auf.

Ein weiterer verwendeter Werkstoff ist ABS/PC (Polymer-Blend aus Acrylnitril/Butadien/Styrol-Copolymer und Polycarbonat). Dieser Werkstoff weist jedoch eine nur unzureichende UV-Beständigkeit, ein schlechtes Wärmealterungsverhalten (Zähigkeit und Bruchdehnung nach Wärmelagerung), ungünstige Oberflächeneigenschaften, schlechte Spannrißbeständigkeit, zum Beispiel gegen Weichmacher, sowie insbesondere schlechte Emissionseigenschaften und ein schlechtes Geruchsverhalten auf. Unter Geruchsverhalten wird die Neigung von Werkstoffen verstanden, nach einer Temperatur- und Klirnalagerung von festgelegter Dauer flüchtige Bestandteile abzugeben, die einen wahrnehmbaren Geruch aufweisen.

Als weiterer Werkstoff kommt ABS/PA (Polymerblend aus ABS und Polyamid) zum Einsatz. Auch ABS/PA weist eine schlechte UV-Beständigkeit, eine schlechte Wärmeformbeständigkeit (Vicat B-Erweichungstemperatur < 105°C), eine schlechte Wärmealterungsbeständigkeit, eine hohe Feuchtigkeitsaufnahme, sowie eine schlechte Fließfähigkeit auf.

Als weiterer Werkstoff kommt PPE/HIPS (Polymerblend aus Polyphenylenoxid und schlagzäh modifiziertem Polystyrol) zum Einsatz. Nachteilig an diesem Werkstoff sind seine schlechte Fließfähigkeit, schlechte UV-Beständigkeit, Schaumhaftung und Wärmealterungsbeständigkeit, sowie sein schlechtes Geruchsverhalten.

Weiterhin wird PET/PC (Polymerblend aus Polyethylentherphtalat und Polycarbonat) verwendet. Nachteilig an diesem Werkstoff sind seine geringe Spannrißbeständigkeit zum Beispiel gegen Weichmacher sowie seine schlechte Fließfähigkeit.

Auch PBT/PC weist als weiterer verwendeter Werkstoff eine schlechte Fließfähigkeit und Spannrißbeständigkeit auf.

Die vorstehend genannten Werkstoffe weisen überwiegend eine nur schlechte Wärmeformbeständigkeit auf, die in einer nur geringen Vicat B-Erweichungstemperatur (Vicat B < 130°C) zum Ausdruck kommt, sowie eine schlechte Wärmealterungsbeständigkeit auf. Eine gute Wärmeformbeständigkeit und Wärmealterungsbeständigkeit der eingesetzten Werkstoffe ist jedoch essentiell, da sich der Kraftfahrzeug-Innenraum, insbesondere unter Einwirkung von Sonnenstrahlung, erheblich aufheizen kann.

Die vorstehend genannten Nachteile konnten mit Polymerwerkstoffen auf der Basis von PBT/ASA/PSAN (Polymerblends aus Polybutylenterephthalat, Acrylnitril/Styrol/Acrylsäureester-Copolymer und Polystyrol/Acrylnitril-Copolymer) behoben werden. Solche Werkstoffe sind in DE-A 39 11 828 allgemein offenbart. Die Ausführungsbeispiele beziehen sich auf Formmassen mit einem hohen Acrylnitril-Anteil der PSAN-Copolymere. Formteile aus diesen Formmassen weisen jedoch, wie die überwiegende Zahl der vorstehend genannten Werkstoffe, ein schlechtes Emissions- und Geruchsverhalten auf. Auch wirkt sich der Glasfaseranteil dieser Formmassen ungünstig auf die Oberflächeneigenschaften und die Zähigkeit der aus ihnen hergestellten Formteile aus.

EP-A 0 471 554 betrifft Polyester-Zusammensetzungen enthaltend Polybutylentherephthalat und bestimmte Copolyester. Die Verwendung dieser Zusammensetzungen zur Herstellung von Kraftfahrzeug-Innenteilen wird nicht offenbart.

US 5,501,898 betrifft Kraftfahrzeug-Innenteile enthaltend ein Laminat aus einer ersten, zweiten und dritten Schicht aus Polyesterfasern.

EP-A 0 643 104 offenbart thermoplastische Formmassen enthaltend ein Therephthalat, ein Acrylat/Styrol/Acrylnitril-Pfropfcopolymerisat mit bimodaler Teilchengrößenverteilung und ein Styrol/Acrylnitril-Copolymerisat. Als Verwendung für die dort beschriebenen Formmassen wird die Herstellung von Gerätegehäusen für empfindliche und hochwertige elektronische Geräte sowie von reißfesten Folien genannt.

US 4,940,746 offenbart thermoplastische Formmassen enthaltend einen Polyester, ein Acrylat/Styrol/Acrylnitril-Pfropfcopolymerisat, ein Styrol/Acrylnitril-Copolymerisat und Glasfasern. Spezielle Verwendungen für aus den Formmassen hergestellten Formteilen werden nicht angegeben.

Aufgabe der Erfindung ist es, für die Herstellung von Formteilen, die im Innenraum von Kraftfahrzeugen eingesetzt werden, geeignete Formmassen zur Verfugung zu stellen, die ein günstiges Eigenschaftsprofil hinsichtlich ihrer mechanischen, optischen und Oberflächeneigenschaften sowie insbesondere eine gute Warmeformbeständigkeit, Wärmealterungsbeständigkeit und ein gutes Emissionsverhalten und/oder Geruchsverhalten aufweisen.

Gelöst wird die Aufgabe durch thermoplastische Formmassen, enthaltend, bezogen auf die Summe der Komponenten A bis C und gegebenenfalls D und E, die insgesamt 100 Gew.-% ergibt,

a) 10 bis 98 Gew.-% mindestens eines aromatischen Polyesters als Komponente A,

b) 1 bis 50 Gew.-% mindestens eines teilchenförmigen Pfropfcopolymerisats mit einer Glasübergangstemperatur der Weichphase unterhalb von 0°C und einer mittleren Teilchengröße von 50 bis 1000 nm als Komponente B,

c) 1 bis 50 Gew.-% mindestens eines Copolymerisats aus den Monomeren

c1) 50 bis 90 Gew.-% mindestens eines vinylaromatischen Monomeren als Komponente C1 und
c2) 10 bis 25 Gew.-% Acrylnitril und/oder Methacrylnitril als Komponente C2,

als Komponente C,

d) 0 bis 25 Gew.-% weitere, mit den Komponenten A und/oder C homogen mischbare oder in diesen dispergierbare, verträgliche Polymere als Komponente D,

e) 0 bis 10 Gew.% übliche Zusatzstoffe wie UV-Stabilisatoren, Ruß, Pigmente, Oxidationsverzögerer, Gleit- und Entformungsmittel als Komponente E.

Als Komponente A enthält die erfindungsgemäße Formmasse 10 bis 98 Gew.-%, bevorzugt 20 bis 75 Gew.-%, besonders bevorzugt 30 bis 60 Gew.-% eines aromatischen Polyesters. Die in den erfindungsgemäßen Formmassen enthaltenen Polyester sind an sich bekannt.

Die Herstellung der Polyester kann durch Reaktion von Terephthalsäure, deren Estern oder anderer esterbildender Derivate mit 1,4-Butandiol, 1,3-Propandiol bzw. 1,2-Ethandiol in an sich bekannter Weise erfolgen.

Bis zu 20 mol-% der Terephthalsäure können durch andere Dicarbonsäuren ersetzt werden. Nur beispielsweise seien hier Naphthalindicarbonsäuren, Isophthalsäure, Adipinsäure, Azelainsäure, Sebacinsäure, Dodecandisäure und Cyclohexandicarbonsäuren, Mischungen dieser Carbonsäuren und esterbildende Derivate derselben genannt.

Auch bis zu 20·mol-% der Dihydroxyverbindungen 1,4-Butandiol, 1,3 Propandiol bzw. 1,2-Ethandiol können durch andere Dihydroxyverbindungen, z.B. 1,6-Hexandiol, 1,4-Hexandiol, 1,4-Cyclohexandiol, 1,4-Di(hydroxymethyl) cyclohexan, Bisphenol A, Neopentylglykol, Mischungen dieser Diole sowie esterbildende Derivate derselben ersetzt werden.

Bevorzugte aromatische Polyester sind Polyethylenterephthalat (PET), Polytrimethylenterephthalat (PTT) und insbesondere Polybutylenterephthalat (PBT), die ausschließlich aus Terephthalsäure und den entsprechenden Diolen 1,2-Ethandiol, 1,3-Propandiol und 1,4-Butandiol gebildet sind. Die aromatischen Polyester können auch ganz oder teilweise in Form von Polyester-Recyclaten, wie PET Mahlgut aus Flaschenmaterial oder aus Abfällen der Flaschenherstellung eingesetzt werden.

In einer besonders bevorzugten Ausführungsform besteht die Komponente A aus

a1) 60 bis 100 Gew.-%, insbesondere 80 bis 95 Gew.-% Polybutylenterephthalat und

a2) 0 bis 40 Gew.-%, insbesondere 5 bis 20 Gew.-% Polyethylenterephthalat.

Als Komponente B enthält die erfindungsgemäße Formmasse 1 bis 50 Gew.-%, bevorzugt 1 bis 25 Gew.-%, besonders bevorzugt 2 bis 15 Gew.-%, insbesondere 2 bis 10 Gew.-% mindestens eines teilchenförmigen Pfropfcopolymerisats mit einer Glasübergangstemperatur der Weichphase unterhalb von 0°C und einer mittleren Teilchengröße von 50 bis 1000 nm.

Vorzugsweise handelt es sich bei Komponente B um ein Pfropfcopolymerisat aus

b1) 50 bis 90 Gew.-% einer teilchenförmigen Pfropfgrundlage B1 mit einer Glasübergangstemperatur unterhalb 0°C und

b2) 10 bis 50 Gew.-% einer Pfropfauflage B2 aus den Monomeren

b21) 50 bis 90 Gew.-% eines vinylaromatischen Monomeren als Komponente B21 und

b22) 10 bis 49 Gew.-% Acrylnitril und/oder Methacrylnitril als Komponente B22.

Die teilchenförmige Pfropfgrundlage B1 kann aus 70 bis 100 Gew.-% eines konjugierten Diens und 0 bis 30 Gew.-% eines difunktionellen Monomeren mit zwei olefinischen, nicht konjugierten Doppelbindungen bestehen. Solche Pfropfgrundlagen werden beispielsweise bei ABS-Polymeren oder MBS-Polymeren als Komponente B eingesetzt.

Gemäß einer bevorzugten Ausführungsform der Erfindung besteht die Pfropfgrundlage B1 aus den Monomeren

b11) 75 bis 99,9 Gew.-% eines $C_1$-$C_{10}$-Alkylesters der Acrylsäure als Komponente B11,

b12) 0,1 bis 10 Gew.-% mindestens eines polyfunktionellen Monomeren mit mindestens zwei olefinischen, nicht konjugierten Doppelbindungen als Komponente B12 und

b13) 0 bis 24,9 Gew.-% eines oder mehrerer weiterer copolymerisierbarer Monomere als Komponente B13.

Bei der Pfropfgrundlage B1 handelt es sich um ein Elastomeres, welches eine Glasübergangstemperatur von bevorzugt unterhalb -20°C, besonders bevorzugt unterhalb -30°C aufweist.

Für die Herstellung des Elastomeren werden als Hauptmonomere B11 Ester der Acrylsäure mit 1 bis 10 C-Atomen, insbesondere 4 bis 8 C-Atomen in der Alkoholkomponente eingesetzt. Besonders bevorzugte Monomere B 11 sind iso- und n-Butylacrylat sowie 2-Ethylhexylacrylat, von denen die beiden letztgenannten besonders bevorzugt sind.

Neben den Estern der Acrylsäure werden als vernetzendes Monomer B 12 0,1 bis 10, bevorzugt 0,1 bis 5, besonders bevorzugt 1 bis 4 Gew.-% eines polyfunktionellen Monomeren mit mindestens zwei olefinischen, nicht konjugierten Doppelbindungen eingesetzt. Beispiele sind Divinylbenzol, Diallylfumarat, Diallylphthalat, Triallylcyanurat, Triallylisocyanurat, Tricylodecenylacrylat und Dihydrodicyclopentadienylacrylat, von denen die beiden zuletzt genannten besonders bevorzugt sind.

Neben den Monomeren B11 und B 12 können am Aufbau der Pfropfgrundlage B1 noch bis zu 24,9, vorzugsweise bis zu 20 Gew.-% weitere copolymerisierbare Monomere, vorzugsweise Butadien-1,3, Styrol, $\alpha$-Methylstyrol, Acrylnitril, Methacrylnitril und $C_1$-$C_8$-Alkylester der Methacrylsäure oder Mischungen dieser Monomeren, beteiligt sein. In einer besonders bevorzugten Ausführungsform enthält die Pfropfgrundlage B 1 kein Butadien-1,3, insbesondere besteht die Pfropfgrundlage B 1 ausschließlich aus den Komponenten B11 und B 12.

Auf die Pfropfgrundlage B1 ist eine Pfropfauflage B2 aus den Monomeren

b21) 50 bis 90 Gew.-%, vorzugsweise 60 bis 90 Gew.-%, besonders bevorzugt 65 bis 80 Gew.-% eines vinylaromatischen Monomeren als Komponente B21 und
b22) 10 bis 50 Gew.-%, vorzugsweise 10 bis 40 Gew.-%, besonders bevorzugt 20 bis 35 Gew.-% Acrylnitril oder Methacrylnitril oder deren Mischungen als Komponente B22

aufgepfropft.

Beispiele für vinylaromatische Monomere sind unsubstituiertes Styrol und substituierte Styrole wie $\alpha$-Methylstyrol, p-Chlorstyrol und p-Chlor-$\alpha$-Methylstyrol. Bevorzugt sind unsubstituiertes Styrol und $\alpha$-Methylstyrol, besonders bevorzugt ist unsubstituiertes Styrol.

Gemäß einer Ausführungsform der Erfindung beträgt die mittlere Teilchengröße der Komponente B 50 bis 200 nm, bevorzugt ca. 100 nm.

Gemäß einer weiteren Ausführungsform der Erfindung beträgt die mittlere Teilchengröße der Komponente B 200 bis 1000 nm, bevorzugt ca. 500 nm.

Gemäß einer weiteren Ausführungsform der Erfindung ist die Teilchengrößenverteilung der Komponente B bimodal, wobei die Komponente B zu 10 bis 90 Gew.-%, bevorzugt zu 30 bis 90 Gew.-% , besonders bevorzugt zu 50 bis 75 Gew.-% aus einem kleinteiligen Pfropfcopolymerisat mit einer mittleren Teilchengröße von 50 bis 200 nm, bevorzugt ca. 100 nm und zu 10 bis 90 Gew.-%, bevorzugt zu 10 bis 70 Gew.-%, besonders bevorzugt zu 25 bis 50 Gew.-% aus einem großteiligen Pfropfcopolymerisat mit einer mittleren Teilchengröße von 250 bis 1000 nm, bevorzugt ca. 500 nm, besteht.

Als mittlere Teilchengröße bzw. Teilchengrößenverteilung werden die aus der integralen Massenverteilung bestimmten Größen angegeben. Bei den erfindungsgemäßen mittleren Teilchengrößen handelt es sich in allen Fällen um die Gewichtsmittel der Teilchengrößen, wie sie mittels einer analytischen Ultrazentrifuge entsprechend der Methode von W. Scholtan und H. Lange, Kolloid-Z. und Z.-Polymere 250 (1972), Seiten 782 - 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$ und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, daß sie auf 10 bzw. 90 Gew.-% der Teilchen bezogen sind. Der Quotient

$$(d_{90} - d_{10}) / d_{50} = Q$$

stellt ein Maß für die Verteilungsbreite der Teilchengröße dar. Als Komponente A erfindungsgemäß verwendbare Emulsionspolymerisate A weisen vorzugsweise Q-Werte kleiner als 0,5, insbesondere kleiner als 0,35 auf.

Das Pfropfcopolymerisat B ist im allgemeinen ein- oder mehrstufig, d.h. ein aus einem Kern und einer oder mehreren Hüllen aufgebautes Polymerisat. Das Polymerisat besteht aus einer Grundstufe (Pfropfkern) B1 und einer oder - bevorzugt - mehreren darauf gepfropften Stufen B2 (pfropfauflage), den sogenannten Pfropfstufen oder Pfropfhüllen.

Durch einfache Pfropfung oder mehrfache Pfropfung können eine oder mehrere Pfropfhüllen auf die Kautschukteilchen aufgebracht werden, wobei jede Pfropfhülle eine andere Zusammensetzung haben kann. Zusätzlich zu den pfropfenden Monomeren können polyfunktionelle vernetzende oder reaktive Gruppen enthaltende Monomere mit aufgepfropft werden (s. z.B. EP-A 0 230 282, DE-A 36 01 419, EP-A0 269 861).

Gemäß einer Ausführungsform der Erfindung dienen als Pfropfgrundlage B 1 vernetzte Acrylsäureester-Polymerisate mit einer Glasübergangstemperatur unter 0°C. Die vernetzten Acrylsäureester-Polymerisate sollen vorzugsweise eine Glasübergangstemperatur unter -20°C, insbesondere unter -30°C, besitzen.

Prinzipiell ist auch ein mehrschaliger Aufbau des Pfropfcopolymerisats möglich, wobei mindestens eine innere Schale eine Glasübergangstemperatur von unter 0°C und die äußerste Schale eine Glasübergangstemperatur von mehr als 23°C aufweisen sollte.

In einer bevorzugten Ausführungsform besteht die Pfropfauflage B2 aus mindestens einer Pfropfhülle, wobei die äußerste Pfropfhülle davon eine Glasübergangstemperatur von mehr als 30°C hat, wobei ein aus den Monomeren der Pfropfauflage B2 gebildetes Polymer eine Glasübergangstemperatur von mehr als 80°C aufweisen würde.

Geeignete Herstellverfahren für Pfropfcopolymerisate B sind die Emulsions-, Lösungs-, Masse- oder Suspensionspolymersiation. Bevorzugt werden die Pfropfcopolymerisate B durch radikalische Emulsionspolymerisation hergestellt, bei Temperaturen von 20°C bis 90°C unter Verwendung wasserlöslicher und oder öllöslicher Initiatoren wie Peroxodisulfat oder Benzoylperoxid, oder mit Hilfe von Redoxinitiatoren. Redoxinitiatoren eignen sich auch zur Polymerisation unterhalb von 20°C.

Geeignete Emulsionspolymerisationsverfahren sind beschrieben in DE-A-28 26 925, DE-A 31 49 358 und in der DE-C-12 60 135.

Der Aufbau der Pfropfhüllen erfolgt vorzugsweise im Emulsionspolymerisationsverfahren, wie es beschrieben ist in den DE-A-32 27 555,31 49 357, 31 49 358, 34 14 118. Das definierte Einstellen der erfindungsgemäßen Teilchengrößen von 50 bis 1000 nm erfolgt bevorzugt nach den Verfahren, die beschrieben sind in der DE-C-12 60 135 und DE-A-28 26 925, bzw. Applied Polymer Science, Band 9 (1965), Seite 2929. Das Verwenden von Polymerisaten mit unterschiedlichen Teilchengrößen ist beispielsweise bekannt aus DE-A-28 26 925 und US 5,196,480.

Als Komponente C enthalten die erfindungsgemäßen Formmassen 1 bis 50 Gew.-%, bevorzugt 10 bis 25 Gew.-%, besonders bevorzugt 12 bis 20 Gew.-% eines Copolymerisats aus den Monomeren

   c1) 75 bis 90 Gew.-%, bevorzugt 77 bis 90 Gew.-%, besonders bevorzugt 81 bis 90 Gew.-%, mindestens eines vinylaromatischen Monomeren als Komponente C1 und

   c2) 10 bis 25 Gew.-%, vorzugsweise 10 bis 23 Gew.%, besonders bevorzugt 10 bis 19 Gew.-%, insbesondere 15 bis 19 Gew.-%, Acrylnitril und/oder Methacrylnitril als Komponente C2.

Als vinylaromatische Monomere sind die oben stehend genannten Monomere C1 und die oben stehend als Komponente B21 genannten vinylaromatischen Monomere geeignet. Vorzugsweise ist Komponente C ein amorphes Polymerisat, wie es vorstehend als Pfropfauflage B2 beschrieben ist. Gemäß einer Ausführungsform der Erfindung wird als Komponente C ein Copolymerisat von Styrol und/oder $\alpha$-Methylstyrol mit Acrylnitril verwendet. Der Acrylnitrilgehalt in diesen Copolymerisaten der Komponente C liegt dabei nicht oberhalb 25 Gew.-% und beträgt im allgemeinen 10 bis 25 Gew.-%, bevorzugt 10 bis 22 Gew.-%, besonders bevorzugt 10 bis 19 Gew.-%, insbesondere 15 bis 19 Gew.-%. Es wird vermutet, daß der niedrige Acrylnitrilgehalt der Komponente C eine bessere Verträglichkeit mit der Komponente A zur Folge hat, wodurch bessere mechanische Eigenschaften bedingt werden. Zur Komponente C zählen auch die bei der Pfropfcopolymerisation zur Herstellung der Komponente B entstehenden freien, nicht gepfropften Styrol-Acrylnitril-Copolymerisate. Je nach den bei Pfropfcopolymerisation für die Herstellung der Pfropfcopolymerisats B gewählten Bedingungen kann es möglich sein, daß bei der Pfropfcopolymerisation schon ein hinreichender Anteil an Komponente C gebildet worden ist. Im allgemeinen wird es jedoch erforderlich sein, die bei der Pfropfcopolymerisation erhaltenen Produkte mit zusätzlicher, separat hergestellter Komponente C abzumischen.

Bei dieser zusätzlichen, separat hergestellten Komponente C kann es sich vorzugsweise um ein Styrol/Acrylnitril-Copolymerisat, ein α-Methylstyrol/-Acrylnitril-Copolymerisat oder ein α-Methylstyrol/Styrol/Acrylnitril-Terpolymerisat handeln. Wesentlich ist, daß der Gehalt an Acrylnitril in den Copolymerisaten C 25 Gew.-%, insbesondere 19 Gew.-% nicht übersteigt. Die Copolymerisate können einzeln oder auch als Gemisch für die Komponente C eingesetzt werden, so daß es sich bei der zusätzlichen, separat hergestellten Komponente C der erfindungsgemäßen Formmassen beispielsweise um ein Gemisch aus einem Styrol/Acrylnitril-Copolymerisat (PSAN) und einem α-Methylstyrol/ Acrylnitril-Copolymerisat handeln kann. Auch der Acrylnitrilgehalt der verschiedenen Copolymerisate der Komponente C kann unterschiedlich sein. Vorzugsweise besteht die Komponente C jedoch nur aus einem oder mehreren Styrol/ Acrylnitril-Copolymerisaten, wobei die Copolymerisate einen unterschiedlichen Gehalt an Acrylnitril aufweisen können. In einer insbesondere bevorzugten Ausführungsform besteht die Komponente C aus nur einem Styrol/Acrylnitril-Copolymerisat.

Als Komponente D können die erfindungsgemäßen Formmassen 0 bis 25 Gew.-% weitere, mit den Komponenten A und/oder C homogen mischbare oder in diesen dispergierbare, verträgliche Polymere enthalten. Es können beispielsweise einschlägig übliche gepfropfte Kautschuke Verwendung finden, wie Ethylen-Vinylacetat-Kautschuke, Siliconkautschuke, Polyetherkautschuke, hydrierte Dienkautschuke, Polyalkenamerkautschuke, Acrylatkautschuke, Ethylen-Propylen-Kautschuke, Ethylen-Propylen-Dien-Kautschuke und Butylkautschuke, Methylmethacrylat-Butadien-Styrol(MBS)-Kautschuke, Methylmethacrylat-Butylacrylat-Styrol-Kautschuke, sofern diese mit der aus den Komponenten A, B und C gebildeten Mischphase mischbar bzw. in dieser dispergierbar sind. Bevorzugt werden Acrylatkautschuk, Ethylen-Propylen(EP)-Kautschuk und Ethylen-Propylen-Dien(EPDM)-Kautschuk Verwendung finden. In Frage kommen ferner mit der aus den Komponenten B und C gebildeten Mischphase verträgliche bzw. mischbare Polymere oder Copolymere wie Polycarbonate, Polymethacrylate, insbesondere PMMA, Polyphenylenether oder syndiotaktisches Polystyrol.

In Frage kommen insbesondere ferner Reaktivkautschuke, die an den Polyester (Komponente A) über eine kovalente Bindung anbinden, wie mit Säureanhydriden, wie Maleinsäureanhydrid, oder Epoxy-Verbindungen, wie Glycidyl-Methacrylat, gepfropfte Polyolefinkautschuke und/oder partikuläre Acrylatkautschuke. Schließlich ist auch die Verwendung eines oder mehrerer Polymere bzw. Copolymere möglich, die in der Grenzfläche zwischen der aus den Komponenten B und/oder C gebildeten amorphen Phase und der aus der Komponente A gebildeten kristallinen oder teilkristallinen Phase vorliegen und so für eine bessere Anbindung der beiden Phasen sorgen. Beispiele solcher Polymere sind Pfropfcopolymere aus PBT und PSAN oder segmentierte Copolymere wie Block-Copolymere oder Multiblock-Copolymere aus mindestens einem Segment aus PBT mit $M_w$ > 1000 und mindestens einem Segment aus PSAN oder einem mit PSAN verträglichen/mischbaren Segment mit $M_w$ >1000.

Als Komponente E enthalten die erfindungsgemäßen Formmassen 0 bis 10 Gew.-% übliche Zusatzstoffe. Als solche Zusatzstoffe seien beispielsweise genannt: UV-Stabilisatoren, Oxidationsverzögerer, Gleit- und Entformungsmittel, Farbstoffe, Pigmente, Färbemittel, Keimbildungsmittel, Antistatika, Antioxidantien, Stabilisatoren zur Verbesserung der Thermostabilität, zur Erhöhung der Lichtstabilität, zum Anheben der Hydrolysebeständigkeit und der Chemikalienbeständigkeit, Mittel gegen die Wännezersetzung und insbesondere die Schmier. Gleitmittel, die für die Herstellung von Formkörpern bzw. Formteilen zweckmäßig sind. Das Eindosieren dieser weiteren Zusatzstoffe kann in jedem Stadium des Herstellungsprozesses erfolgen, vorzugsweise jedoch zu einem frühen Zeitpunkt, um frühzeitig die Stabilisierungseffekte (oder anderen speziellen Effekte) des Zusatzstoffes auszunutzen. Wärmestabilisatoren bzw. Oxidationsverzögerer sind üblicherweise Metallhalogenide (Chloride, Bromide, Iodide), die sich von Metallen der Gruppe I des Periodensystems der Elemente ableiten (wie Li, Na, K, Cu).
Geeignete Stabilisatoren sind die üblichen gehinderten Phenole, aber auch Vitamin E bzw. analog aufgebaute Verbindungen. Auch HALS-Stabilisatoren (Hindered Amine Light Stabilizers), Benzophenone, Resorcine, Salicylate, Benzotriazole und andere Verbindungen sind geeignet (beispielsweise Irganox®, Tinuvin®, wie Tinuvin® 770 (HALS-Absorber, Bis (2,2,6,6-tetramethyl-4-piperidyl)sebacat) oder Tinuvin®P (UV-Absorber - (2H-Benzotriazol-2-yl)-4-methylphenol), Topanol®). Diese werden üblicherweise in Mengen bis zu 2 Gew.-% (bezogen auf das Gesamtgemisch) verwendet.

Geeignete Gleit- und Entformungsmittel sind Stearinsäuren, Stearylalkohol, Stearinsäureester bzw. allgemein höhere Fettsäuren, deren Derivate und entsprechende Fettsäuregemische mit 12 - 30 Kohlenstoffatomen. Die Mengen dieser Zusätze liegen im Bereich von 0,05 - 1 Gew.-%.

Auch Siliconöle, oligomeres Isobutylen oder ähnliche Stoffe kommen als Zusatzstoffe in Frage; die üblichen Mengen betragen 0,05 - 5 Gew.-%. Pigmente, Farbstoffe, Farbaufheller, wie Ultramarinblau, Phthalocyanine, Titandioxid, Cadmiumsulfide, Derivate der Perylentetracarbonsäure sind ebenfalls verwendbar. Als Zusatzstoff kann ferner Ruß sowohl rein als auch als Masterbatch eingesetzt werden.

Verarbeitungshilfsmittel und Stabilisatoren wie UV-Stabilisatoren, Schmiermittel und Antistatika werden üblicherweise in Mengen von 0,01 - 5 Gew.-% verwendet, bezogen auf die gesamte Formmasse.

Auch Keimbildungsmittel, wie Talkum, Calciumfluorid, Natriumphenylphosphinat, Aluminiumoxid oder feinteiliges Polytetrafluorethylen können in Mengen z.B. bis zu 5 Gew.-%, bezogen auf die gesamte Formmasse, angewandt werden. Weichmacher, wie Phthalsäuredioctylester, Phthalsäuredibenzylester, Phthalsäurebutylbenzylester, Kohlenwasserstofföle, N-(n-Butyl)benzolsulfonamid, o- und p-Toluolethylsulfonamid werden vorteilhaft in Mengen bis etwa 5 Gew.-%, bezogen auf die Formmasse, zugesetzt. Färbemittel, wie Farbstoffe und Pigmente können in Mengen bis zu etwa 5 Gew.-%, bezogen auf die Formmasse, zugesetzt werden.

Das Mischen der Komponenten A, B und C und gegebenenfalls D und E kann nach jeder beliebigen Weise nach allen bekannten Methoden erfolgen. Beim Mischen können die Komponenten A bis C und gegebenenfalls D und E als solche oder auch in Form von Mischungen der einen Komponente mit einer oder mehreren der anderen Komponenten eingesetzt werden. Beispielsweise kann die Komponente B mit einem Teil oder der gesamten Komponente C und gegebenenfalls den Komponenten D und E vorgemischt und anschließend mit den übrigen Komponenten gemischt werden. Wenn die Komponenten B und C beispielsweise durch Emulsionspolymerisation hergestellt worden sind, ist es möglich, die erhaltenen Polymerdispersionen miteinander zu vermischen, darauf die Polymerisate gemeinsam auszufällen und das Polymerisatgemisch aufzuarbeiten. Vorzugsweise erfolgt jedoch das Abmischen der Komponenten B und C durch gemeinsames Exdrudieren, Kneten oder Verwalzen der Komponenten, wobei die Komponenten B und C, sofern erforderlich, zuvor aus der bei der Polymerisation erhaltenen Lösung oder wässrigen Dispersion isoliert worden sind. Die erfindungsgemäßen thermoplastischen Formmassen können beispielsweise hergestellt werden, indem man die Komponente A mit jeweils den Komponenten B und C oder mit einer Mischung aus diesen, und gegebenenfalls mit den Komponenten D und E mischt und in einem Extruder aufschmilzt.

Die erfindungsgemäßen Formmassen können nach den bekannten Verfahren der Thermoplastverarbeitung zu Formteilen verarbeitet werden. Insbesondere kann deren Herstellung durch Thermoformen, Extrudieren, Spritzgießen, Kalandrieren, Hohlkörperblasen, Pressen, Preßsintern, Tiefziehen oder Sintern, vorzugsweise durch Spritzgießen erfolgen. Die aus den erfindungsgemäßen Formmassen herstellbaren Formteile sind ebenfalls Gegenstand der vorliegenden Erfindung.

Die aus den erfindungsgemäßen Formmassen hergestellten Formteile weisen nur geringe Emissionen an flüchtigen Bestandteilen mit einem wahrnehmbaren Geruch auf. Das Geruchsverhalten von Polymerwerkstoffen wird nach DIN 50011 /PV 3900 beurteilt und gilt für Bauteile des Fahrzeuginnenraums. Das Ergebnis der Geruchsprüfung nach dieser Norm ist im Falle der erfindungsgemäßen Formteile im allgemeinen besser als Note 5, bevorzugt besser als Note 4,5. Die Kohlenstoff Emission der Formteile nach PV 3341 ist im allgemeinen < 60 µg/g, bevorzugt < 50 µg/g, besonders bevorzugt <40 µg/g.

Die erfindungsgemäßen Formteile weisen weiterhin eine gute Wärmeformbeständigkeit auf. Die Vicat B-Erweichungstemperatur ist im allgemeinen > 120°C, bevorzugt > 130°C, besonders bevorzugt > 140°C.

Die erfindungsgemäßen Formteile weisen ferner ein gutes Wärmealterungsverhalten auf.

Die erfindungsgemäßen Formteile weisen ferner gute mechanische Eigenschaften auf. So ist ihr Elastizitätsmodul im allgemeinen > 1800, bevorzugt > 2000 MPa, ihre Streckspannung im allgemeinen > 40MPa, bevorzugt > 4 MPa, ihre Schlagzähigkeit nach ISO 179/1eU im allgemeinen > 50 kJ pro m$^2$, bevorzugt > 80 kJ pro m$^2$ ihre Schlagzähigkeit ohne vorherige Wärmelagerung nach ISO 179/1eA im allgemeinen > 10 kJ pro m$^2$ und ihre Fließfähigkeit (MVR 260°C/5 kp Auflagekraft) > 20, bevorzugt > 25 g/cm$^3$ .

Die erfindungsgemäßen Formteile weisen, auch nach 1000 h dauernder Wärmelagerung bei 130°C, bei -20°C kein Splitterverhalten im Durchstoßversuch (3 mm Plattendurchmesser, gemäß ISO 6603/2) auf.

Die erfindungsgemäßen Formteile eigenen sich aufgrund ihrer hohen Wärmeformbeständigkeit, ihrer guten Wärmealterungsbeständigkeit, ihrer UV-Beständigkeit, ihren guten mechanischen Eigenschaften sowie ihrer sehr guten Oberflächeneigenschaften für eine Vielzahl von Anwendungen. Nur beispielhaft seien genannt:Anwendungen im Haushalts- und Sanitärbereich, wie Kunststoffteile in Rasierapparaten, Anwendungen im Sport- und Freizeitbereich, wie Gartenwerkzeuge und Gartengeräte sowie Anwendungen bei Kraftfahrzeugen im Innen- und Außenbereich.

Aufgrund ihrer Eigenschaften, z.B. wegen ihres guten Emissionsverhaltens und ihrer guten mechanischen Eigenschaften, sind die erfindungsgemäßen Formteile insbesondere für Anwendungen im Kraftfahrzeug-Innenraum geeignet. Erfindungsgemäße Formteile sind daher insbesondere aus den erfindungsgemäßen Formmassen hergestellte Abdeckungen, Ablagefächer, Teile von Instrumententafeln, Türbrüstungen, Teile für die Mittelkonsole sowie Halterungen für Radio und Klimaanlage, Blenden für die Mittelkonsole, Blenden für Radio, Klimaanlage und Aschenbecher, Verlängerungen der Mittelkonsole, Stautaschen, Ablagen für die Fahrer und Beifahrertür, Ablagen für die Mittelkonsole, Bauteile für den Fahrer- und den Beifahrersitz, wie Sitzverkleidungen, Defrosterkanal, Innenspiegelgehäuse, Instrumentenhutzen, Instrumentenfassungen, Ober- und Unterschale für den Lenkstock, Luftführungskanäle, Luftausströmer und Zwischenstücke für Personenanströmer und Defrosterkanal, Türseitenverkleidungen, Verkleidungen im Kniebereich, Luftaustrittsdüsen, Entfrosteröffnungen, Schalter und Hebel. Diese Anwendungen stehen nur beispielhaft für denkbare Kraftfahrzeug-Innenanwendungen.

Wegen ihrer sehr guten Oberflächeneigenschaften brauchen die erfindungsgemäßen Formteile nicht lackiert werden. Auch ist ihre Zähigkeit gegenüber glasfaserverstärkten Formteilen erhöht.

Gegenstand der Erfindung ist auch die Verwendung der erfindungsgemäßen Formmassen für die Herstellung der genannten Formteile.

Die Erfindung wird durch die nachstehenden Beispiele näher erläutert:

**Beispiele:**

Beispiele 1 bis 4 und Vergleichsbeispiele V1 und V2

Entsprechend den Angaben in der nachstehenden Tabelle 1 werden die angegebenen Mengen Polybutylenterephthalat (PBT), Standard- bzw. Recyclat-Polyethylenterephthalat (PET), Pfropfkautschuke P1 und P2, Copolymerisate PSAN 1, PSAN 2 und PSAN 3, Reaktivkautschuke und Additive in einem Schneckenextruder bei einer Temperatur von 250°C bis 270°C gemischt. Aus den dadurch gebildeten Formmassen werden die den betreffenden DIN-Normen entsprechenden Probekörper spritzgegossen.

Modifier 1 ist ein Ethylacrylat-Methylmethacrylat-Glycidylmethacrylat-Kautschuk der Fa. Elf Atochem (Lotader®)

Modifier2 ist ein Butylacrylat-MMA-Glycidylmethacrylat-Kautschuk der Fa. Rohm und Haas (Paraloid®)

P1 ist ein kleinteiliger ASA-Pfropfkautschuk mit 25 Gew.-% Acrylnitril in der SAN-Pfropfhülle mit einer mittleren Teilchengröße von ca. 100 nm.

P2 ist ein großteiliger ASA-Pfropfkautschuk mit 25 Gew.-% Acrylnitril in der SAN-Pfropfhülle und einem mittleren Teilchendurchmesser von ca. 500 nm.

PSAN 1 ist ein Styrol-/Acrylnitril-Copolymerisat mit 19 Gew.-% Acrylnitril.

PSAN 2 ist ein Styrol-/Acrylnitril-Copolymerisat mit 35 Gew.-% Acrylnitril.

Die Beurteilung des Emissionsverhaltens erfolgte nach DIN 3341.

Tabelle 2 enthält die Ergebnisse der Prüfung des Emissionsverhaltens sowie die Ergebnisse der darüber hinaus durchgeführten mechanischen Prüfungen.

Tabelle 1:

| Einsatzstoff [Gew.-%] | Vergleichsbeispiel V1 | Vergleichsbeispiel V2 | Beispiel 1 | Beispiel 2 | Beispiel 3 | Beispiel 4 |
|---|---|---|---|---|---|---|
| PBT | 74,4 | 63,4 | 78,4 | 65,4 | 77,4 | 75,4 |
| Modifier 1 | | | | | 6 | |
| Modifier 2 | | | | | | 8 |
| P1 | 12 | 12,5 | 10 | 10,5 | 7,5 | 7,5 |
| P2 | | 5 | | 5 | | |
| PSAN 1 | | | 10 | 17,5 | 7,5 | 7,5 |
| PSAN 2 | 12 | 17,5 | | | | |
| Nucleierungsmittel | 0,1 | 0,1 | 0,1 | 0,1 | 0,1 | 0,1 |
| Ruß | 1,5 | 1,5 | 1,5 | 1,5 | 1,5 | 1,5 |

Tabelle 2:

| | Vergleichsbeispiel V1 | Vergleichsbeispiel V2 | Beispiel 1 | Beispiel 2 | Beispiel 3 | Beispiel 4 |
|---|---|---|---|---|---|---|
| Fließfähigkeit nach MVR 260/5 [cm$^3$/10 min] | 56 | 59 | 60 | 65 | 30 | 35 |

Tabelle 2: (fortgesetzt)

| | Vergleichsbeispiel V1 | Vergleichsbeispiel V2 | Beispiel 1 | Beispiel 2 | Beispiel 3 | Beispiel 4 |
|---|---|---|---|---|---|---|
| Schlagzähigkeit nach ISO 179/1eU [kJ/m$^2$] | 120 | 130 | 145 | 140 | nicht bestimmt | nicht bestimmt |
| Schlagzähigkeit nach ISO 179/1eU bei -40°C [kJ/m$^2$] | 50 | 58 | 65 | 65 | 45 | 80 |
| Kerbschlagzähigkeit nach ISO 179/1eA [kJ/m$^2$] | 6 | 7 | 8 | 9 | 15 | 14 |
| Elastizitätsmodul nach DIN 53457 [MPa] | 2400 | 2450 | 2500 | 2450 | 2300 | 2200 |
| Durchstoßarbeit nach ISO 6603/2 [Nm] | 10 | 12 | 18 | 19 | 41 | 45 |
| Kohlenstoff-Emission nach PV 3341 [µg C/g] | 70 | 65 | 35 | 30 | 49 | 38 |

**Patentansprüche**

1. Verwendung thermoplastischer Formmassen, enthaltend, bezogen auf die Summe der Komponenten A bis C und gegebenenfalls D und E, die insgesamt 100 Gew.-% ergibt,

a) 10 bis 98 Gew.-% mindestens eines aromatischen Polyesters als Komponente A,
b) 1 bis 50 Gew.-% mindestens eines teilchenförmigen Pfropfcopolymerisats mit einer Glasübergangstemperatur der Weichphase unterhalb von 0°C und einer mittleren Teilchengröße von 50 bis 1000 nm als Komponente B,
c) 1 bis 50 Gew.-% mindestens eines Copolymerisats auf den Monomeren

c1) 75 bis 90 Gew.-% mindestens eines vinylaromatischen Monomeren als Komponente C1 und
c2) 10 bis 25 Gew.-% Acrylnitril und/oder Methacrylnitril als Komponente C2,

als Komponente C,
d) 0 bis 25 Gew.-% weitere, mit den Komponenten A und/oder C homogen mischbare oder in diesen dispergierbare, verträgliche Polymere als Komponente D,
e) 0 bis 10 Gew.-% Zusatzstoffe ausgewählt aus Ruß, Pigmente, UV-Stabilisatoren, Oxidationsverzögerer, Gleit- und Entformungsmittel als Komponente E,

für die Herstellung von Formteilen für den Kraftfahrzeug-Innenraum.

2. Verwendung nach Anspruch 1, **dadurch gekennzeichnet, daß** die Komponente A besteht aus

a1) 60 bis 100 Gew.-% Polybutylenterephthalat und
a2) 0 bis 40 Gew.-% Polyethylenterephthalat.

3. Verwendung nach einem der Ansprüche 1 oder 2, **dadurch gekennzeichnet, daß** die Komponente B besteht aus

b1) 50 bis 90 Gew.-% einer teilchenförmigen Pfropfgrundlage B1 aus den Monomeren

b1.1) 75 bis 99,9 Gew.-% eines $C_1$-$C_{10}$-Alkylesters der Acrylsäure als Komponente B11,
b1.2) 0,1 bis 10 Gew.-% mindestens eines polyfunktionellen Monomeren mit mindestens zwei olefinischen, nicht konjugierten Doppelbindungen als Komponente B 12 und
b1.3) 0 bis 24,9 Gew.-% eines oder mehrerer weiterer copolymerisierbarer Monomere als Komponente B13,

und
b2) 10 bis 50 Gew.-% einer Pfropfauflage B2 aus den Monomeren

b2.1) 50 bis 90 Gew.-% eines vinylaromatischen Monomeren als Komponente B21 und
b2.2) 10 bis 50 Gew.-% Acrylnitril und/oder Methacrylnitril als Komponente B22.

4. Verwendung nach einem der Ansprüche 1 bis 3, **dadurch gekennzeichnet, daß** die Komponenten B21 und/oder C1 unsubstituiertes Styrol sind.

5. Verwendung nach einem der Ansprüche 1 bis 4, **dadurch gekennzeichnet, daß** die Komponente B 1 aus den Komponenten B 11 und B 12 besteht.

6. Verwendung nach einem der Ansprüche 1 bis 5 zur Herstellung von Formteilen für den Kraftfahrzeug-Innenraum in der Form von Abdeckungen, Ablagefächer, Teile von Instrumententafeln, Türbrüstungen, Teilen für die Mittelkonsole sowie Halterungen für Radio und Klimaanlage, Blenden für die Mittelkonsole, Blenden für Radio, Klimaanlage und Aschenbecher, Verlängerungen der Mittelkonsole, Stautaschen, Ablagen für die Fahrer- und Beifahrertür, Ablagen für die Mittelkonsole, Bauteilen für den Fahrer- und den BeifahrerSitz, wie Sitzverkleidungen, Defrosterkanal, Innenspiegelgehäuse, Instrumentenhutzen, Instrumentenfassungen, Ober- und Unterschale für den Lenkstock, Luftführungskanälen, Luftausströmer und Zwischenstücken für Personenanströmer und Defrosterkanal, Türseitenverkleidungen, Verkleidungen im Kniebereich, Luftaustrittsdüsen, Entfrosteröffnungen, Schalter und Hebel.

7. Verwendung von Formteilen aus Formmassen, wie sie in den Ansprüchen 1 bis 5 definiert sind, für den Innenraum von Kraftfahrzeugen.


**Claims**

1. The use of thermoplastic molding compositions comprising, based on the total of components A to C and, if desired, D and E, which in total give 100% by weight,

   a) as component A, from 10 to 98% by weight of at least one aromatic polyester,
   b) as component B, from 1 to 50% by weight of at least one particulate graft copolymer whose soft phase has a glass transition temperature below 0°C and whose median particle size is from 50 to 1000 nm,
   c) as component C, from 1 to 50% by weight of at least one copolymer on the following monomers

      c1) as component C1, from 75 to 90% by weight of at least one vinylaromatic monomer, and
      c2) as component C2, from 10 to 25% by weight of acrylonitrile and/or methacrylonitrile,

   d) as component D, from 0 to 25% by weight of other compatible polymers homogeneously miscible with components A and/or C or dispersible in these, and
   e) as component E, from 0 to 10% by weight of additives chosen from carbon black, pigments, UV stabilizers, oxidation retarders, lubricants and mold-release agents, for producing moldings for motor vehicle interiors.

2. The use as claimed in claim 1, wherein component A is composed of

   a1) from 60 to 100% by weight of polybutylene terephthalate and
   a2) from 0 to 40% by weight of polyethylene terephthalate.

3. The use as claimed in claim 1 or 2, wherein component B is composed of

   b1) from 50 to 90% by weight of a particulate graft base B1 made from the following monomers

b1.1) as component B11, from 75 to 99.9% by weight of a $C_1$-$C_{10}$-alkyl acrylate,

b1.2) as component B12, from 0.1 to 10% by weight of at least one polyfunctional monomer having at least two nonconjugated olefinic double bonds, and

b1.3) as component B13, from 0 to 24.9% by weight of one or more other copolymerizable monomers,

and

b2) from 10 to 50% by weight of a graft B2 made from the following monomers

b2.1) as component B21, from 50 to 90% by weight of a vinylaromatic monomer, and

b2.2) as component B22, from 10 to 50% by weight of acrylonitrile and/or methacrylonitrile.

4. The use as claimed in any one of claims 1 to 3, wherein components B21 and/or C1 are unsubstituted styrene.

5. The use as claimed in any one of claims 1 to 4, wherein component B1 is composed of components B11 and B12.

6. The use as claimed in any one of claims 1 to 5 for producing moldings for motor vehicle interiors in the form of protective coverings, stowage compartments, parts of dashboards, door breasts, parts for the center console, and also retaining elements for radio and air-conditioning system, covers for the center console, covers for radio, air-conditioning system and ashtray, prolongations of the center console, stowage pockets, storage areas for the driver's door and front passenger's door, storage areas for the center console, components for the driver's and passenger's seats, such as seat coverings, defroster ducts, internal mirror housings, protective surrounds for instruments, instrument sockets, upper and lower shells for the steering column, air-conveying ducts, air blowers and adapters for personal airflow devices and defroster ducts, door side coverings, coverings in the knee area, air-outlet nozzles, defroster apertures, switches and levers.

7. The use of moldings made from molding compositions as defined in claims 1 to 5 for motor vehicle interiors.


**Revendications**

1. Utilisation de masses de moulage thermoplastiques contenant, par rapport à la somme des composants A à C et éventuellement D et E, qui font au total 100% en poids,

a) 10 à 98% en poids d'au moins un polyester aromatique, comme composant A,

b) 1 à 50% en poids d'au moins un copolymère de greffage particulaire présentant une température de transition vitreuse de la phase molle inférieure à 0°C et une taille moyenne des particules de 50 à 1000 nm, comme composant B,

c) 1 à 50% en poids d'au moins un copolymère à base, comme monomères,

c1) de 75 à 90% en poids d'au moins un monomère vinylaromatique, comme composant C1, et

c2) de 10 à 25% en poids d'acrylonitrile et/ou de méthacrylonitrile, comme composant C2,

comme composant C,

d) 0 à 25% en poids d'autres polymères compatibles, miscibles de manière homogène avec les composants A et/ou C ou dispersables dans ces derniers, comme composant D,

e) 0 à 10% en poids d'additifs choisis parmi du noir de fumée, des pigments, des agents stabilisants aux U. V., des retardateurs d'oxydation, des agents lubrifiants et de démoulage, comme composant E,

pour la fabrication de pièces de façonnage destinées à l'espace interne de véhicules automobiles.

2. Utilisation suivant la revendication 1, **caractérisée en ce que** le composant A est constitué

a1) de 60 à 100% en poids de téréphtalate de polybutylène, et

a2) de 0 à 40% en poids de téréphtalate de polyéthylène.

3. Utilisation suivant l'une des revendications 1 et 2, **caractérisée en ce que** le composant B est constitué

b1) de 50 à 90% en poids d'une base de greffage particulaire B1 à base, comme monomères,

b1.1) de 75 à 99,9% en poids d'un ester alkylique en $C_1$-$C_{10}$ de l'acide acrylique, comme composant B11,

b1.2) de 0,1 à 10% en poids d'au moins un monomère polyfonctionnel comportant au moins deux doubles liaisons oléfiniques, non conjuguées, comme composant B12, et

b1.3) de 0 à 24,9% en poids d'un ou de plusieurs autres monomères copolymérisables, comme composant B13,

et

b2) de 10 à 50% en poids d'une couche de greffage B2 à base, comme monomères,

b2.1) de 50 à 90% en poids d'un monomère vinylaromatique, comme composant B21, et

b2.2) de 10 à 50% en poids d'acrylonitrile et/ou de méthacrylonitrile, comme composant B22.

4. Utilisation suivant l'une des revendications 1 à 3, **caractérisée en ce que** les composants B21 et/ou C1 sont du styrène non substitué.

5. Utilisation suivant l'une des revendications 1 à 4, **caractérisée en ce que** le composant B1 est constitué des composants B11 et B12.

6. Utilisation suivant l'une des revendications 1 à 5, pour la fabrication de pièces façonnées destinées à l'espace interne de véhicules automobiles, sous la forme de recouvrements, de vide-poches, de pièces de tableaux de bord, d'appuis de portes, de pièces pour le pupitre central, ainsi que de supports pour la radio et l'installation de climatisation, d'écrans pour le pupitre central, de cadres pour la radio, l'installation de climatisation et le cendrier, de prolongements du pupitre central, de poches, de coffrets pour la porte du conducteur et du passager, de coffrets pour le pupitre central, de composants de construction pour le siège du pilote et du passager, comme des revêtements de sièges, de canal de dégivrage, de boîtiers de rétroviseurs, de montures d'instrument, de coques supérieure et inférieure pour la colonne de direction, de canaux de guidage d'air, de dispositifs d'émission d'air et de pièces intermédiaires pour des dispositifs de soufflage et un canal de dégivrage, des habillages latéraux de portes, des revêtements dans la zone des genoux, de tuyères de sortie d'air, d'orifices de dégivrage, de commutateurs et de leviers.

7. Utilisation de pièces façonnées à base des masses de moulage, telles que définies dans les revendications 1 à 5, pour l'espace interne de véhicules automobiles.